# EUROPÄISCHE PATENTANMELDUNG

(11) **EP 1 235 194 A2**
(43) Veröffentlichungstag der Anmeldung: **28.08.2002**
(21) Anmeldenummer: 02002674.6
(22) Anmeldetag: 06.02.2002
(51) Int. Cl.: G08C 17/02

(54) **Fernsteuer- und Überwachungssystem für Geräte mit Sensoren und/oder Aktuatoren**

(30) Priorität: 21.02.2001 DE 10108243
(71) Anmelder: ABB Research Ltd., 8050 Zürich (CH)
(72) Erfinder: Apneseth, Christoffer, 0559 Oslo (NO)
(74) Vertreter: Miller, Toivo

(57) **Zusammenfassung**

Es wird ein System für eine eine Vielzahl von Sensoren und/oder Aktoren (2.1...2.n) aufweisende Maschine oder Anlage (1) vorgeschlagen,
- wobei an der Maschine oder Anlage mindestens eine Kommunikationseinrichtung (3) montiert ist, an welche über kurze Verbindungskabel mindestens zwei Sensoren und/oder Aktoren (2.1...2.n) angeschlossen sind,
- wobei die Kommunikationseinrichtung (3) einen Modulator/Codierer (11) mit nachgeschaltetem Funksender (12) zum Senden von Sensorsignalen und/oder einen Funkempfänger (14) mit nachgeschaltetem Demodulator /Decodierer (15) zum Empfang von Aktor-Ansteuersignalen aufweist,
- wobei die Kommunikationseinrichtung (3) über Funksignale mit einer Basisstation (4) kommuniziert, welche mit einem Zentralrechner der Maschine oder Anlage (1) verbunden ist und
- wobei die Basisstation (4) einen Funkempfänger (21) mit nachgeschaltetem Demodulator/Decodierer (22) zum Empfang von Sensorsignalen und/oder einen Modulator/Codierer (24) mit nachgeschaltetem Funksender (25) zum Senden von Aktor-Ansteuersignalen aufweist.

## Beschreibung

Die Erfindung bezieht sich auf ein System für eine eine Vielzahl von Sensoren und/oder Aktoren aufweisende Maschine oder Anlage.

Aus der DE 199 26 799 A1 ist ein System für eine eine Vielzahl von Näherungssensoren aufweisende Maschine, insbesondere Fertigungsautomat bekannt,
- wobei jeder Näherungssensor mindestens eine zur Energieaufnahme aus einem mittelfrequenten Magnetfeld geeignete Sekundärwicklung aufweist,
- wobei mindestens eine von einem mittelfrequenten Oszillator gespeiste Primärwicklung zur drahtlosen Versorgung der Näherungssensoren mit elektrischer Energie vorgesehen ist und
- wobei jeder Näherungssensor mit einer Sendeeinrichtung ausgestattet ist, welche interessierende Sensor-Informationen beinhaltende Funksignale an eine zentrale, mit einem Prozeßrechner der Maschine verbundene Empfangseinrichtung abgibt.

Aus der DE 199 26 562 ist ein System für eine eine Vielzahl von Aktoren aufweisende Maschine, insbesondere Fertigungsautomat bekannt,
- wobei jeder Aktor mindestens eine zur Energieaufnahme aus einem mittelfrequenten Magnetfeld geeignete Sekundärwicklung aufweist,
- wobei mindestens eine von einem mittelfrequenten Oszillator gespeiste Primärwicklung zur drahtlosen Versorgung der Aktoren mit elektrischer Energie vorgesehen ist und
- wobei jeder Aktor mit einer Empfangseinrichtung ausgestattet ist, welche Funksignale einer mit einem Prozeßrechner der Maschine verbundenen zentralen Sendeeinrichtung empfängt.

Diese bekannten Systeme haben den Vorteil, daß im Vergleich zu konventionellen Lösungen mit Kabelanschluß zur Kommunikation und zur elektrischen Energieversorgung der Sensoren/Aktoren der durch Planung, Material, Installation, Dokumentation und Wartung bedingte relativ hohe Kostenfaktor eines Kabelanschlusses entfällt. Es können keine Ausfälle aufgrund von Kabelbrüchen oder schlechten, beispielsweise korrodierten Kontakten auftreten.

Der Erfindung liegt die Aufgabe zugrunde, ein System für eine eine Vielzahl von Sensoren und/oder Aktoren aufweisende Maschine oder Anlage anzugeben, welches für bestimmte Arten von Maschinen oder Anlagen, insbesondere Roboter, optimiert ist, bei denen die Sensoren und/oder Aktoren gehäuft und relativ dicht gedrängt an bestimmten Orten auftreten.

Diese Aufgabe wird erfindungsgemäß gelöst durch ein System für eine eine Vielzahl von Sensoren und/oder Aktoren aufweisende Maschine oder Anlage,
- wobei an der Maschine oder Anlage mindestens eine Kommunikationseinrichtung montiert ist, an welche über kurze Verbindungskabel mindestens zwei Sensoren und/oder Aktoren angeschlossen sind,
- wobei die Kommunikationseinrichtung einen Modulator/Codierer mit nachgeschaltetem Funksender zum Senden von Sensorsignalen und/oder einen Funkempfänger mit nachgeschaltetem Demodulator /Decodierer zum Empfang von Aktor-Ansteuersignalen aufweist,
- wobei die Kommunikationseinrichtung über Funksignale mit einer Basisstation kommuniziert, welche mit einem Zentralrechner der Maschine oder Anlage verbunden ist und
- wobei die Basisstation einen Funkempfänger mit nachgeschaltetem Demodulator/Decodierer zum Empfang von Sensorsignalen und/oder einen Modulator/Codierer mit nachgeschaltetem Funksender zum Senden von Aktor-Ansteuersignalen aufweist.

Die mit der Erfindung erzielbaren Vorteile bestehen insbesondere darin, daß das vorgeschlagene System beispielsweise bei Roboterarmen mit gehäuft an bestimmten Orten auftretenden Sensoren und/oder Aktoren kostengünstiger ist und zudem geringeres Gewicht aufweist als die in den Dokumenten DE 199 26 799 A1 und DE 199 26 562 vorgeschlagenen Lösungen, bei denen eine eigene Kommunikationseinrichtung in jedem einzelnen Sensor und/oder jedem einzelnen Aktor realisiert ist. Selbstverständlich ist das vorgeschlagene System auch kostengünstiger und weist geringeres Gewicht aus, wenn man es mit einem konventionellen System mit verdrahteten Sensoren und/oder Aktoren vergleicht. Das vorgeschlagene System führt zu vorteilhaft gewichtsreduzierten Roboterarmen, was sich günstig hinsichtlich der Dynamik der Arme und der erforderlichen Antriebsleistungen für die Bewegungen der Roboterarme auswirkt.

Da die Verbindungsleitungen zwischen Sensoren und/oder Aktoren und der gemeinsamen Kommunikationseinrichtung sehr kurz sind und keinesfalls über bewegliche Gelenke zwischen Roboterabschnitten führen, ist der Verschleiß bzw. die Abnutzung dieser Verbindungsleitungen auch nur sehr gering, ganz im Gegensatz zu einem Roboterarm mit konventionell verdrahteten Sensoren und/oder Aktoren, bei denen die Verbindungsleitungen derart flexibel auszubilden sind, daß sie alle Bewegungen zwischen den unterschiedlichen Roboterabschnitten zulassen. Dementsprechend ergibt sich eine Ermüdung (Verschleiß, Abnutzung) der Verbindungsleitungen während der Lebensdauer des Roboterarmes und es besteht die Gefahr von Ermüdungsbrüchen. Diese Gefahr ist beim erfindungsgemäßen Vorschlag keinesfalls gegeben.

Weitere Vorteile sind aus der nachstehenden Beschreibung ersichtlich.

Vorteilhafte Ausgestaltungen der Erfindung sind in den Unteransprüchen gekennzeichnet.

Die Erfindung wird nachstehend anhand der in der Zeichnung dargestellten Ausführungsbeispiele erläutert. Es zeigen:
- Fig.1: eine Anordnung mit einem Roboterarm und einer Vielzahl von Sensoren/Aktoren,
- Fig. 2: den Aufbau von Sensoren/Aktoren, gemeinsamer Kommunikationseinrichtung und Basisstation im Detail.

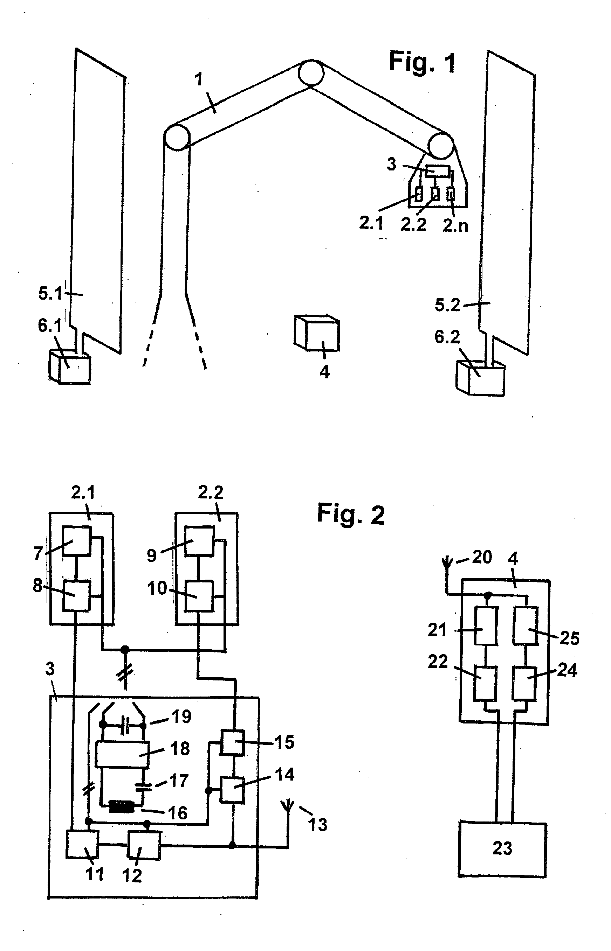

In Fig. 1 ist eine Anordnung mit einem Roboterarm und einer Vielzahl von Sensoren und/oder Aktoren dargestellt. Es ist ein mehrfach gelenkig abknickbarer Roboterarm 1 zu erkennen, wobei am endseitigen Gelenkabschnitt des Roboterarms eine Gruppe von relativ eng benachbarten Sensoren/Aktoren 2.1, 2.2...2.n installiert ist. Es ist nachfolgend stets von Sensoren/Aktoren die Rede, wobei es sich wahlweise um Sensoren oder um Aktoren handeln kann. Die Sensoren/Aktoren 2.1, 2.2...2.n sind über kurze Verbindungskabel mit einer gemeinsamen Kommunikationseinrichtung 3 verbunden, welche ebenfalls am endseitigen Gelenkabschnitt des Roboterarms installiert ist.

Die Kommunikationseinrichtung 3 enthält die erforderlichen Funksender und/oder Funkempfänger, um derart eine drahtlose Kommunikation mit einer zentralen Basisstation 4 zu realisieren. Details hierzu sind unter Fig. 2 beschrieben.

Vorzugsweise erfolgt die elektrische Energieversorgung der Sensoren/Aktoren 2.1...2.n ebenfalls unter Einsatz der gemeinsamen Kommunikationseinrichtung. Zur drahtlosen elektrischen Versorgung sind zwei Primärwicklungen 5.1 bzw. 5.2 beidseitig des Roboters installiert und jeweils an eine Magnetfelderzeugungsvorrichtung 6.1 bzw. 6.2 angeschlossen. Diese Magnetfelderzeugungsvorrichtungen 6.1, 6.2 weisen einen Oszillator auf, welcher die Primärwicklungen 5.1, 5.2 mit einer mittelfrequenten Schwingung im Bereich von etwa 15 kHz bis etwa 15 MHz speist, wobei den Primärwicklungen vorzugsweise ein Resonanzkondensator parallel oder in Serie liegt. Insbesondere zwischen den Primärwicklungen 5.1, 5.2 wird ein mittelfrequentes magnetisches Feld gebildet. Die Kommunikationseinrichtung 3 enthält mindestens eine Sekundärwicklung. Aufgrund rein magnetischer Kopplung zwischen Primärwicklung 5.1, 5.2 und Sekundärwicklung im Sinne eines Mittelfrequenz-Transformators erfolgt eine Umwandlung von magnetischer Energie in elektrische Energie mittels dieser Sekundärwicklung.

Selbstverständlich sind auch andere Konfigurationen zur Magnetfelderzeugung einsetzbar, beispielsweise drei orthogonal zueinander angeordnete Primärwicklungen.

Bei der Ausführungsform gemäß Fig. 1 ist lediglich eine einzige Gruppe von Sensoren/Aktoren gezeigt, welche über kurze Drahtverbindungen (Verbindungsleitungen) an die gemeinsame Kommunikationseinrichtung 3 angeschlossen ist. Dies ist lediglich beispielhaft zu verstehen, denn selbstverständlich können sich auf den weiteren Gelenkabschnitten des Roboterarms 1 weitere Gruppen von Sensoren/Aktoren befinden, welche ebenfalls jeweils an eine eigene Kommunikationseinrichtung angeschlossen sind.

In Fig. 2 ist der Aufbau von Sensoren/Aktoren, gemeinsamer Kommunikationseinrichtung und Basisstation im Detail dargestellt. Es ist eine Kommunikationseinrichtung 3 mit daran angeschlossenem Sensor 2.1 und Aktor 2.2 zu erkennen. Die Anschlüsse erfolgen jeweils über kurze Verbindungsleitungen. Selbstverständlich können weitere Sensoren und/oder Aktoren an diese gemeinsame Kommunikationseinrichtung 3 angeschlossen sein. Der Sensor 2.1 weist einen die Sensor-Umgebung detektierenden Sensorkopf 7 mit nachgeschalteter Signalauswertung 8 auf. Das aufbereitete Sensorsignal gelangt zu einem Modulator/Codierer 11 mit nachgeschaltetem Funksender 12 und Antenne 13.

Der Aktor 2.2 weist eine Aktoreinheit 9, beispielsweise ein Druckluftventil oder ein Schütz, sowie eine Ansteuereinheit 10 hierfür auf. Die Ansteuereinheit 10 ist an einen Demodulator/Decodierer 15 der Kommunikationseinrichtung 3 angeschlossen. Dem Demodulator/Decodierer 15 ist ein Funkempfänger 14 vorgeschaltet, welcher mit der Antenne 13 verbunden ist.

Wie bereits vorstehend erwähnt, weist die Kommunikationseinrichtung 3 zweckmäßig eine elektrische Energieversorgungseinheit auf, welche zur Speisung der Baukomponenten der angeschlossenen Sensoren und/oder Aktoren sowie zur Speisung der Baukomponenten der Kommunikationseinrichtung 3 selbst dient. Diese Energieversorgungseinheit besteht aus mindestens einer Sekundärwicklung 16, einem parallel oder in Reihe angeordneten Resonanzkondensator 17, einem Gleichrichter 18 sowie einem Energiespeicher 19 am DC-Ausgang des Gleichrichters. Die dem Gleichrichter 18 entnehmbare Spannung wird dem Sensorkopf 7, der Signalauswertung 8, gegebenenfalls der Aktoreinheit 8, der Ansteuereinheit 10 sowie dem Modulator/Codierer 11, dem Funksender 12, dem Funkempfänger 14 und dem Demodulator/Decodierer 15 zugeführt. Selbstverständlich sind auch Aktoreinheiten einsetzbar, welche - ausgenommen die Ansteuerung - nicht elektrisch, sondern beispielsweise per Druckluft betrieben werden.

Selbstverständlich sind auch andere Sekundärwicklungs-Konfigurationen einsetzbar, beispielsweise drei orthogonal zueinander angeordnete Sekundärwicklungen.

Die an einen Zentralrechner 23 (Prozeßrechner, Speicherprogrammierbare Steuerung) angeschlossene Basisstation 4 weist eine Antenne 20 auf, an welche ein Funkempfänger 21 und ein Funksender 25 angeschlossen sind. Die Signale des Funkempfängers 21 werden einem Demodulator/Decodierer 22 zugeführt, welcher mit dem Zentralrechner 23 verbunden ist. Dem Funksender 25 ist ein Modulator/Codierer 24 vorgeschaltet, welcher ebenfalls mit dem Zentralrechner 23 verbunden ist.

## Patentansprüche

1. System für eine eine Vielzahl von Sensoren und/oder Aktoren (2.1 ...2.n) aufweisende Maschine oder Anlage (1),
- wobei an der Maschine oder Anlage mindestens eine Kommunikationseinrichtung (3) montiert ist, an welche über kurze Verbindungskabel mindestens zwei Sensoren und/oder Aktoren (2.1...2.n) angeschlossen sind,
- wobei die Kommunikationseinrichtung (3) einen Modulator/Codierer (11) mit nachgeschaltetem Funksender (12) zum Senden von Sensorsignalen und/oder einen Funkempfänger (14) mit nachgeschaltetem Demodulator /Decodierer (15) zum Empfang von Aktor-Ansteuersignalen aufweist,
- wobei die Kommunikationseinrichtung (3) über Funksignale mit einer Basisstation (4) kommuniziert, welche mit einem Zentralrechner der Maschine oder Anlage (1) verbunden ist und
- wobei die Basisstation (4) einen Funkempfänger (21) mit nachgeschaltetem Demodulator/Decodierer (22) zum Empfang von Sensorsignalen und/oder einen Modulator/Codierer (24) mit nachgeschaltetem Funksender (25) zum Senden von Aktor-Ansteuersignalen aufweist.

2. System nach Anspruch 1, **dadurch gekennzeichnet, daß** die Kommunikationseinrichtung (3) zusätzlich zur elektrischen Energieversorgung der Sensoren und/oder Aktoren (2.1...2.n) dient, wozu die Maschine oder Anlage (1) im Einflußbereich mindestens einer von einer Magnetfelderzeugungsvorrichtung (6.1, 6.2) gespeisten, ein Magnetfeld erzeugenden Primärwicklung (5.2, 5.2) liegt und wozu die Kommunikationseinrichtung (3) mindestens eine zur Energieaufnahme aus diesem Magnetfeld geeignete Sekundärwicklung (16) mit nachgeschaltetem Gleichrichter (18) aufweist.

3. System nach Anspruch 2, **dadurch gekennzeichnet, daß** zur Bildung von Resonanzkreisen jeweils mindesten ein Resonanzkondensator in Reihe oder parallel zur Primärwicklung (5.1, 5.2) und/oder Sekundärwicklung (16) angeordnet ist.
